# EUROPEAN PATENT SPECIFICATION

(11) **EP 0 390 566 B1**
(45) Date of publication and mention of the grant of the patent: **20.10.1993**
(21) Application number: 90303374.4
(22) Date of filing: 29.03.1990
(51) Int. Cl.: C03C 23/00

(54) **Method of producing silica glas having refractive index distribution**
Verfahren zur Herstellung von Silikaglas mit einer Brechwertverteilung
Procédé de production de verre de silice avec une distribution d'indice de réfraction

(30) Priority: 31.03.1989 JP 78298/89; 31.03.1989 JP 78301/89
(43) Date of publication of application: 03.10.1990
(73) Proprietor: MITSUBISHI GAS CHEMICAL COMPANY, INC., Chiyoda-ku, Tokyo (JP)
(72) Inventor: Kondo, Osamu, c/o Central Res. Inst. of Mitsubishi, Katsushika-ku, Tokyo (JP); Hirata, Masukazu, c/o Central Res. Inst. of Mitsub, Katsushika-ku, Tokyo (JP); Arii, Mitsuzo, c/o Central Res. Inst. of Mitsub, Katsushika-ku, Tokyo (JP)
(74) Representative: Myerscough, Philip Boyd

(56) References cited:
- CHEMICAL ABSTRACTS, vol. 104, no. 14, April 1986, page 310, abstract no. 114771y, Columbus, Ohio, US; & JP-A-60 186 424 (HOYA CORP.) 21-09-1985
- CHEMICAL ABSTRACTS, vol. 110, no. 6, 6th February 1989, page 298, abstract no. 43681e, Columbus, Ohio, US; & JP-A-63 195 132 (SEIKO EPSON CORP.) 12-08-1988
- PATENT ABSTRACTS OF JAPAN, vol. 11, no. 89 (C-411)[2536], 19th March 1987; & JP-A-61 242 918 (CANON INC.) 29-10-1986
- CHEMICAL ABSTRACTS, vol. 108, no. 14, April 1988, page 330, abstract no. 117554y, Columbus, Ohio, US; & JP-A-62 292 623 (SEIKO EPSON CORP.) 19-12-1987
- CHEMICAL ABSTRACTS, vol. 109, no. 2, July 1988, page 261, abstract no. 10642u, Columbus, Ohio, US; & JP-A-63 060 121 (FURUKAWA ELECTRIC CO., LTD) 16-03-1988
- PATENT ABSTRACTS OF JAPAN, vol. 6, no. 241 (P-158)[1119], 30th November 1982; & JP-A-57 139 709 (NIPPON DENSHIN DENWA KOSHA) 28-08-1982
- PATENT ABSTRACTS OF JAPAN, vol. 11, no. 75 (C-408)[2522], 6th March 1987; & JP-A-61 232 248 (CANON INC.) 16-10-1986

## Description

This invention relates to a method of producing silica glass which internally has a refractive index distribution for optical waveguide control. Further, it relates to a method of producing so-called an "embedded" silica glass waveguide having a refractive index distribution in a partial region of silica glass.

Several methods of forming a variety of optical-function devices by introducing a substance, which changes a refractive index, into glass for optical waveguide control have been hitherto proposed.

One of such methods is known as an ion exchange method. In this method, the ion exchange is carried out by immersing multicomponent glass containing an exchangeable ion component in a molten salt containing an ion to increase or decrease a refractive index, whereby a refractive index distribution is formed [E. Okuda et al. Applied Optics, 23, 1747 (1984)]. This method has a characteristic in that a very moderate, nearly ideal parabolic refractive index distribution can be formed. It, however, has the following defects: Since the ion diffusion rate is low, it requires procedures of heating, etc., and a long period of time is required to obtain a necessary distribution. Further, this method is limited to monovalent ions having high mobility, and it cannot be applied to ions having greater valency.

In the method of producing so-called an "embedded" silica glass waveguide, a glass substrate surface is masked by depositing a metal prior to ion exchange, whereby an ion exchange region is limited [M. Oikawa et al. Electron Lett., 17(3), 452 (1981). However, this method has a problem in that a second ion exchange is required to fabricate an embedded waveguide, thus making the process very complicated.

An electric field assisted ion exchange method has been also proposed, which seeks to shorten the diffusion time and to promote embedding of a dopant into a substrate. In this method, however, complicated devices are required, i.e. the substrate is prepared in a box form, and the like, and complicated procedures are also required.

Another method is known as a molecular stuffing method. In this method, a porous glass as a substrate is immersed in an aqueous solution containing, as a dopant, a monovalent ion such as Cs⁺, Tl⁺, or the like to diffuse (stuff) the ion into pores of the substrate. The substrate is then immersed in a suitable solvent to elute (unstuff) the ion partially, whereby a desired refractive index distribution is formed. Then, the distribution is fixed by depositing the ion in the pores, and the substrate is fired to render it nonporous [Asahara, Ceramics, 21, 425 (1986)]. This method has a merit that an index distribution even for large-size rod lens can be produced for a comparatively short period of time at a temperature around room temperature. However, it has defects in that not only its manufacuring step is complicated but also the dopant substance usable is limited to water-soluble salts. For this reason, this method has a problem that some ions cause crystallization while sintering if there is used porous glass manufactured according to a sol-gel method which has recently attracted attention as a method of synthesizing inexpensive silica glass.

Furthermore, a method of introducing, as an oxide precursor, a substance other than an ion, e.g. chloride, metal alkoxide, or the like has been suggested. This method makes it comparatively easy to dope porous glass manufactured according to a sol-gel method. These precursors (mostly liquid at an ordinary temperature) are, in general, highly reactive, and it is therefore difficult to handle them while their liquid phase is maintained. Hence, it has been difficult to dope glass accurately with a desired amount thereof or to form an accurate refractive index distribution within glass.

An embedded glass substance is also manufactured by partly clogging pores of porous glass with a photopolymerizable low-molecular weight compound to limit the diffusion region into which an ion or an oxide precursor is diffused (Japanese Laid-Open Patent Publication No. 232248/1986).

The dopant fixing is often carried out by utilizing pyrolysis during the sintering. Since, however, dissipation from the pores and some other undesired phenomena occur during the heating time, it has been very difficult to control the refractive index distribution.

It is an object of this invention to provide a simple method of producing silica glass having a refractive index distribution internally for optical waveguide control.

It is another object of this invention to provide a method of simply producing silica glass having a desired refractive index distribution internally, which can control the dopant concentration accurately.

It is further another object of this invention to provide a method of producing silica glass having a refractive index distribution, which uses a highly reactive and difficult-to-handle oxide precursor.

It is yet another object of this invention to provide a method of producing silica glass having a parabolic refractive index distribution, which can be carried out for a short period of time by a simple procedure.

It is still another object of this invention to provide a method of producing silica glass having a desired refractive index distribution internally, which can finely control the diffusion region of a dopant in the lateral direction of the silica glass, i.e. the direction at right angles to the thickness direction thereof.

According to this invention, there is provided a method of producing silica glass, which comprises:
(a) a step of diffusing a dopant into pores of porous glass by bringing the dopant in a gas phase into contact with the porous glass until the dopant reaches its adsorption equilibrium amount,
(b) a step of partially removing the diffused dopant by holding the porous glass in an atmosphere maintaining a partial pressure of the dopant at a lower level than that of an equilibrium adsorption pressure of the dopant in the above diffusion step (a) to lower the dopant concentration in the vicinity of the porous glass surface portion,
(c) a step of fixing the dopant within the pores of the porous glass, and
(d) a step of firing the porous glass to render it nonporous.

Further, according to this invention, there is provided a method of producing silica glass, wherein:
the above diffusion step (a) is preceded by (e) a step of partly clogging the pores of the porous glass with a polymer of a polymerizable compound, and
the above fixing step (c) is followed by (f) a step of removing the polymer of the polymerizable compound in the pores by decomposition.

Fig. 1 shows a schematic view of a gas phase doping apparatus useful in this invention.

Fig. 2 shows a Ge concentration distribution in the thickness direction of silica glass obtained according to the method of this invention.

Fig. 3 shows a Ge concentration distribution in the thickness direction of silica glass produced according to a method which consists of the steps of this invention except for the step (b) of partially removing a dopant (Comparative Example 1).

Fig. 4 shows cross sectional views of silica glass at steps of partly clogging its pores in the lateral direction.

Fig. 5 shows a Ge concentration distribution at the cross section of the waveguide which was fabricated according to the method described in Example 2, where Δ n indicates refractive index difference.

In this invention, the dopant concentration can be uniformly and accurately controlled by placing porous glass in a vapor of a dopant substance and introducing the dopant vapor into the porous glass until an adsorption equilibrium is reached. In this invention, the amount of an intended dopant adsorbed to a porous glass is preliminarily measured as a function of the dopant pressure at a constant temperature, and, on the basis of the resultant adsorption isothermic line, the porous glass is placed under a dopant pressure by which to obtain a desired dopant concentration, whereby a predetermined amount of the dopant can be doped very accurately. Then, the porous glass is placed under a dopant atmosphere having a lower pressure than the equilibrium adsorption pressure, whereby the dopant is removed from the vicinity of the porous glass surface to convert to a new adsorption equilibrium. In this conversion course, a distribution having a maximum of the dopant concentration within the glass is formed. At this stage, the partial removal of the dopant is stopped. And, the dopant is fixed, and the glass is fired to render it nonporous, whereby silica glass having a refractive index distribution having a maximal refractive index within the glass is produced.

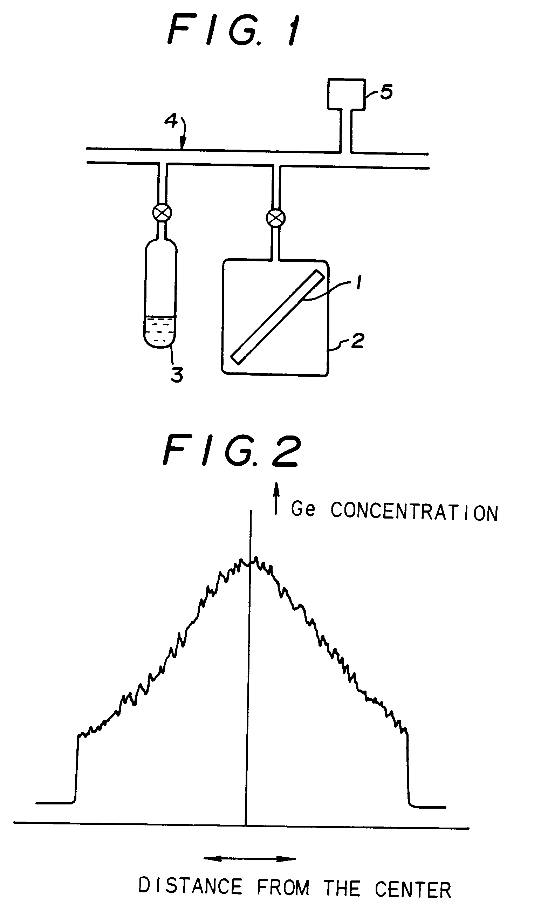

This invention will be explained according to Fig. 1.

In order to achieve an adsorption equilibrium easily, this invention uses a vacuum line 4 for drying and doping porous glass and removing a dopant partially. This vacuum line has an advantage in that the preliminary complete removal of water which is adsorbed within the pores of the porous glass and prevents diffusion, the doping and the partial removal of the dopant can be carried out on one line as a series of procedures. And, since highly reactive liquids, e.g. an oxide precursor, are also replaced within the vacuum line, they can be handled very easily.

This invention will be illustrated more in detail hereinbelow.

A container 2 containing porous glass 1 which has been preliminarily measured for an adsorption isothermic line in the presence of a doping substance is evacuated, and optionally heated to remove water in the glass fully. Then, a dopant vapor having a pressure to give a desired dopant adsorption amount is introduced to allow the porous glass to adsorb a dopant by adjusting a stop cock of a container containing a dopant 3 with observing a pressure gauge 5. The equilibrium adsorption amount at this stage determines the refractive index of the doped glass.

The dopant is required to be a substance having a vapor pressure, e.g. a pressure of several Torr to dozons Torr, (x1.33.10²Pa),such that a suitable amount of the dopant is adsorbed to the porous glass at room temperature or under suitable heat of a temperature comparatively near to room temperature. The other required characteristic of the dopant is that it should be converted to a substance which has a lower vapor pressure by a procedure of fixing the dopant within the pores of the porous glass, e.g. hydrolysis, heating, etc. The dopant is finally fixed within the porous glass as a stable oxide, and has characteristics of an oxide precursor. Typical examples of the dopant satisfying these characteristics are a metal halide, alkoxide, hydride, alkyl compound, and the like. A mixture of some of these may be also used, and a vapor thereof may be diluted with a suitable gas, such as a helium gas, nitrogen gas, or the like. Examples of the metal are those metals which come under the groups IIA, IIB, IIIA, IIIB, IVA, IVB, VA and VB of the periodic table. Of these metals, the preferable examples are Ge, Sn, Pb, Ti, P, As and B, and the most preferable examples are Ge and Ti.

The amount of the dopant adsorbed is influenced by pore characteristics of a porous glass. And, porous glass having a pore diameter of less than 20 nm is selected. The pore characteristics of the porous glass differ to a great extent depending upon its production process.

For example, the porous glass is manufactured by phase-separating treatment of boro-silicate glass, known as Vycor (trade name, supplied by U.S. Coning Glass Works), or manufactured by a sol-gel method. The dopant concentration can be controlled in a wide range by selecting kinds of the porous glass and the dopant depending upon silica glass applications. This invention uses a gas phase doping method, whereby the dopant diffusion rate is very high, and therefore, the doping can be advantageously completed for a very short period of time.

After a uniform doping within the porous glass is completed due to an adsorption equilibrium, the porous glass is left to stand in an atmosphere having a lower dopant pressure than the adsorption equilibrium pressure to remove the dopant partially from the glass surface. In this case, the dopant pressure is reduced into a predetermined pressure, for example, by using a vacuum pump, or substituting some other gas for the dopant. The dopant concentration distribution within the porous glass is formed depending upon a balance between diffusion of the dopant within the glass and the rate of dopant removal from the glass surface. By suitably selecting the pressure and the standing time a parabolic distribution, may be achived.

When the doping is carried out such that the doping reaches the limit where all of the pores are filled with the dopant, the dopant within the pores is, as it may be said, in a liquid phase, and, in particular, at an initial stage of gas phase removal, the dopant evaporates forming a gas-liquid interface within the porous glass. Therefore, if the dopant removal is stopped during the evaporation, it is possible to form a steeper refractive index distribution based on the gas-liquid interface than a distribution formed when the doping does not reach the limit.

In this invention, the doping is carried out in a gas phase as discussed above. Therefore, this invention has an advantage in that the dopant adsorption and removal rates are very high, whereby a region having a maximum of a dopant concentration can be rapidly formed within the glass.

In the gas phase doping method of this invention, the drying of the porous glass and the doping including the dopant removal are carried out within a vacuum line, whereby a step of removal of water which is adsorbed within the pores and prevents diffusion, and a step of formation of a dopant concentration distribution by doping can be carried out on one line as a series of operation procedures. For this reason, this invention has an advantage in that a variety of dopants having high reactivity can be safely and stably used without dissipating them out of the line.

After the desired dopant concentration distribution is obtained as explained above, the dopant is fixed within the pores. The requirement in this step is that the dopant concentration distribution formed is not disturbed, and means therefor can be selected depending upon properties of the dopant to be used. Preferable modes of the means are hydrolysis, pyrolysis, oxidation using gaseous oxygen, and the like. For example, the hydrolysis can be carried out by immersing the porous glass in water, by introducing steam into the vacuum line, or the like. The porous glass in which the dopant is so fixed is then heated to a predetermined temperature, whereby there is obtained nonporous silica glass having a refractive index distribution.

The method of producing an "embedded" silica glass waveguide will be explained hereinbelow.

In this invention, pores of porous glass is filled with a photopolymerizable compound. Then, the pores are partly exposed through a mask having a desired pattern to photopolymerize the photopolymerizable compound. The nonexposed portion of the photopolymerizable compound is removed. In this manner, the pores in the light-permeable porous glass is regioselectively clogged with a polymer of the photopolymerizable compound in the lateral direction of the porous glass, i.e. in the direction at right angles to the thickness direction, whereby lateral diffusion is prevented. Thereafter, the porous glass is doped with a dopant in a gas phase by utilizing multilayer adsorption of a dopant substance vapor to the pore surfaces of the porous glass.

The doping is carried out on the basis of a charactristic that the equilibrium adsorption amount depends upon a dopant pressure. Thus, the nonclogged pores are, at first, entirely doped under an equilibrium pressure corresponding to a dopant amount by which to obtain a desired maximum refractive index. Then, the glass is left to stand in an atmosphere having a dopant partial pressure lower than the equilibrium pressure to remove the dopant partially, whereby the dopant concentration only around the glass surface is decreased, and a dopant concentration distribution having a maxium concentration within the glass is formed.

The resultant dopant distribution is fixed within the pores of the glass, and the glass is sintered to render it nonporous, whereby a desired optical waveguide portion is formed within the glass.

In this invention, a three-dimensional (embedded) optical waveguide can be easily produced with a simple apparatus and operation procedures.

The diffusion of a dopant gas in the lateral direction can be controlled by position-selectively clogging the pores. Therefore, if the pores are clogged very finely, it is possible to form a dopant pattern which is as fine as the clogging accuracy and consists of doped portions and undoped portions. In this case, a fine pattern by dozens micrometer order can be also formed by carrying out the exposure through a photomask.

The photopolymerizable compound used in this invention is not critical. Ordinary photopolymerizable low-molecular weight compounds are usable if they can be filled in pores of porous glass for a comparatively short period of time and are easily photopolymerizable and if a polymer formed therefrom can be easily removed by decomposition under heat in an oxygen-containing atmosphere. Such photopolymerizable compounds are easily evaporated off and removable from the pore interiors by allowing them to stand under a suitable temperature or a suitably reduced pressure. The photopolymerizable low-molecular weight compound may be a monomer which activates itself by direct absorption of light and initiates polymerization, or a monomer which contains a substance (photosensitizer) to generate a radical by decomposition under light and initiates polymerization by irradiation of it with light.

Examples of such a photopolymerizable compound are acrylic acid, methacrylic acid, styrene and derivatives of these, and they are also low-molecular weight compounds having a photopolymerizable group such as an acryloyl group (CH₂=CH-COO-), metacryloyl group (CH₂=C(CH₃)-COO-), acrylamide group (CH₂=CH-CONH-), maleic diester (-OCOCH=CH-COO-), vinylthioether group (CH₂=CH-S-), vinylamino group (CH₂=CH-NH-), glycidy group 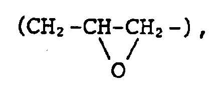
acethylenically unsaturated group (-C≡C-), or the like.

This invention uses an adsorption equilibrium of a dopant vapor to porous glass, whereby there is provided a method of producing silica glass internally having a refractive index distribution with ease and high accuracy.

This invention makes it possible to control the dopant concentration accurately, whereby there is provided a method of producing silica glass internally having a desired refractive index distribution with ease and for a short period of time.

According to this invention, there is provided a method of simply producing silica glass internally having a desired refractive index distribution by using an oxide precursor which is highly reactive and difficult to handle.

According to this invention, there is provided a method of producing silica glass, in which a parabolic refractive index distribution can be formed even in large-sized glass for a very short period of time.

Silica glass produced according to this invention is useful in the field of opto-electronics such as a GRIN lens, optical waveguide path, etc.

This invention makes it possible to finely control the dopant diffusion region in the lateral direction of silica glass, i.e. in the direction at right angles to the thickness direction thereof, whereby there is provided a method of producing silica glass internally having a desired refractive index distribution.

Silica glass produced according to this invention is suitable for production of a three-dimensional optical waveguide path, etc., and very useful in the field of opto-electronics.

This invention will be explained further in detail hereinbelow by reference to Examples.

### EXAMPLE 1

Tetramethylorthosilicate [Si(OCH₃)₄] was hydrolyzed with a 0.05 N hydrochloric acid aqueous solution to prepare a sol, and the sol was gelled in a suitable container. The resultant gel was dried under an atmosphere having a temperature of 25°C and a 40 % relative humidity, and fired in an electric oven at 750°C to obtain flat porous glass having a thickness of about 1 mm. The porous glass had a bulk density of 1.7 g/cm³ and a specific surface area of 400 m²/g. The porous glass was heated to 150°C under vacuum for 1 hour to remove adsorbed water. Then, the temperature was adjusted back to room temperature, and the porous glass was allowed to adsorb a germanium tetrachloride vapor (GeCl₄) until an equilibrium was reached. In this case, the final equilibrium pressure was 11 Torr (x1.33.10²Pa), and 0.30 g of GeCl₄ per 1 g of SiO₂ was adsorbed. Then, the system was evacuated until the atmosphere around the porous glass nearly became 0 Torr (x1.33.10²Pa), whereby the adsorbed GeCl₄ was partially removed from the glass surface. About five minutes later, the porous glass was taken out of the vacuum line, and immersed in pure water at 25°C for 4 hours to fix the dopant as GeO₂. The elution of the Ge into the water on this time scale was low as compared with the effect of the partial removal in the gas phase, and the concentration profile was determined mainly by the partial removal step. The glass was taken out of the pure water, dried at room temperature, and heated to 1,000°C in an electric oven to render it nonporous. The cross section of the resultant sample was measured by using an electron probe microanalyzer (EPMA) to show that the Ge concentration decreased parabolically towards the surfaces as shown in Fig. 2, and that the sample was thus a slab GRIN lens having a maximum refractive index difference of 0.012.

### COMPARATIVE EXAMPLE 1

Example 1 was repeated to produce porous glass doped with GeCl₄, and the porous glass was treated in the same way as in Example 1 except that the GeCl₄ removal step was omitted. The cross section of the resultant sample, which was subjected to fixing of GeCl₄ and rendered nonporous, was measured by using an EPMA.

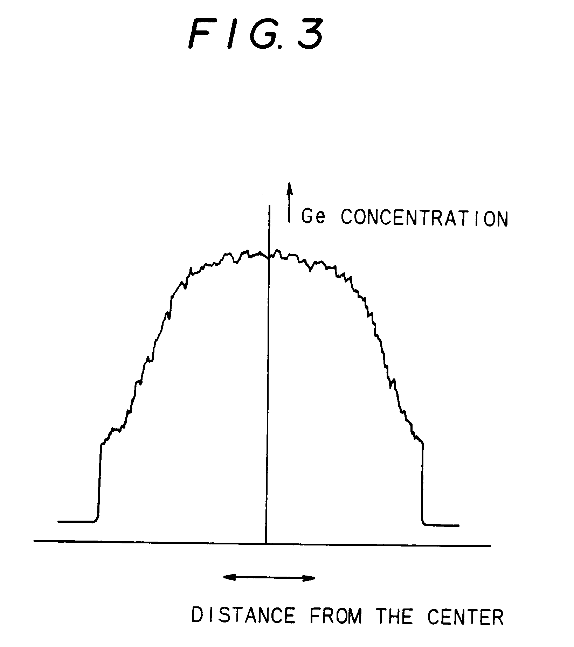

Fig. 3 shows the result. An elution was slightly observed in the marginal portions. However, the sample had a nearly uniform Ge concentration as a whole.

### EXAMPLE 2

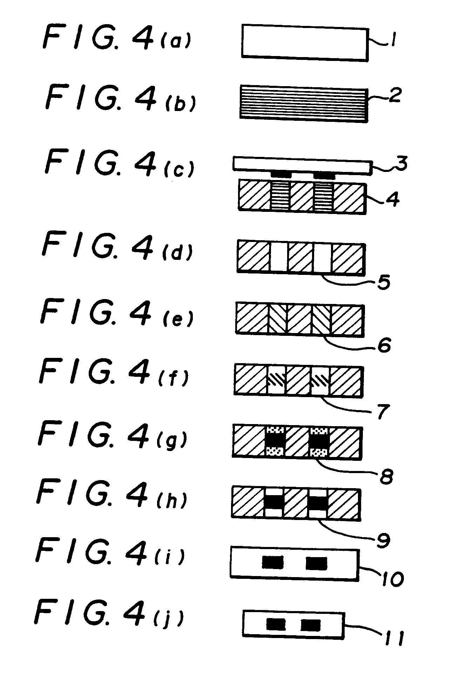

The same porous glass as that obtained in Example 1 was heated to 150°C under vacuum for 1 hour to remove adsorption water. Then, the temperature was adjusted back to room temperature [Fig. 4(a)], and the porous glass was immersed in methyl acrylate (MA) containing 1 mol% of 2-ethoxy-2-phenyl-acetophenone as a photosensitizer for 5 hours [Fig. 4(b)]. In Fig. 4(b), numeral 2 indicates porous glass impregnated with this photopolymerizable low-molecular weight compound. The glass was taken out, and exposed to UV ray through a photomask 3 formed of glass having a pattern made of metal chromium, whereby the MA in regions other than portions shaded with the mask pattern was photopolymerized [Fig. 4(c)]. In Fig. 4(c), numeral 4 indicates a region where the low-molecular weight compound is polymerized. Thereafter, the glass was allowed to stand at room temperature for 30 minutes, and further allowed to stand under vacuum at 100°C for 30 minutes to remove the nonpolymerized MA in the pattern-shaded portions [Fig. 4(d)]. In Fig. 4(d), numeral 5 indicates a region where the nonpolymerized low-molecular weight compound is removed. Thus, the pores were partly clogged.

The glass was placed in a vacuum line, and the entire line was evacuated to vacuum. Then, a germanium tetrachloride (GeCl₄) vapor was introduced, and adsorbed into pores until an equilibrium was reached [Fig. 4(e)]. In Fig. 4(e), numeral 6 indicates a region where a dopant is adsorbed. In this case, the final equilibrium pressure was 40 Torr, and it took about 2 hours before the equilibrium was reached. Then, the system was evacuated to vacuum until the atmosphere surrounding the porous glass became nearly 0 Torr, whereby the adsorbed GeCl₄ was partially removed through the glass surface for 5 minutes [Fig. 4(f)]. In Fig. 4(f), numeral 7 shows a state where the dopant in the vicinity of the glass surface is removed.

The porous glass was taken out of the vacuum line, and immersed in pure water at 25°C for 4 hours to hydrolyze the GeCl₄ and fix it as GeO₂ [Fig. 4 (g)]. In Fig. 4(g), numeral 8 shows a state where the dopant is fixed by hydrolysis, and there is water penetrating the vicinity of the glass surface. Then, the glass was taken out of the water, and dried at room temperature [Fig. 4(h)]. In Fig. 4(h), numeral 9 shows a state in which the water is removed. The glass was then heated to 600°C in an electric oven. By this heating, the photopolymerized MA clogging the pores was decomposed and evaporated [Fig. 4(i)]. In Fig. 4(i), numeral 10 indicates a state where the polymer is removed by pyrolysis. Further, the glass was rendered nonporous by heating to 1,000°C [Fig. 4(j)]. In Fig. 4(j), numeral 11 indicates nonporous glass.

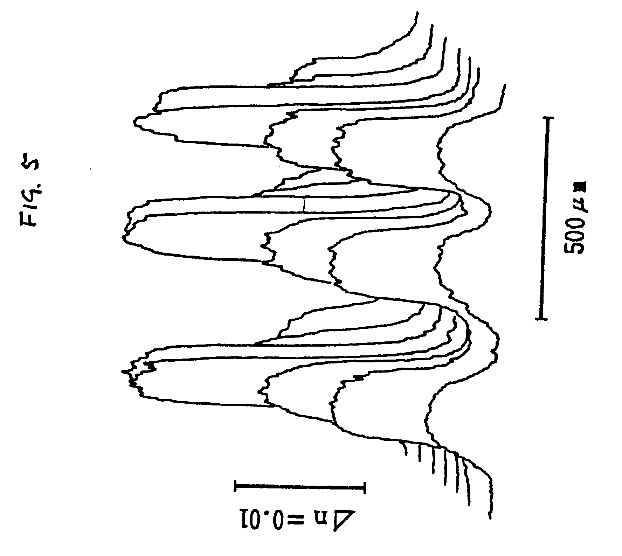

The cross section of the resultant sample was measured by using a EPMA to show that a region having a high refractive index due to GeO₂ was formed within the glass. Fig. 5 shows the results.

## Claims

1. A method of producing a silica glass, which comprises:
a) diffusing a dopant into the pores of a porous silica glass by contacting the dopant in a gas phase with the porous glass until the dopant reaches an adsorption equilibrium amount,
b) partially removing the diffused dopant by holding the porous glass in an atmosphere maintaining a partial pressure of the dopant at a lower level than that of the equilibrium adsorption pressure of the dopant from diffusion step (a) to lower the dopant concentration in the vicinity of the porous glass surface portion,
c) fixing the dopant within the pores of the porous glass, and
d) firing the porous glass to render it nonporous.

2. A method according to claim 1, wherein the porous glass is that which is produced by a sol-gel method or phase-separation treatment of boro-silicate glass.

3. A method according to claim 1 or 2, wherein the dopant is a metal oxide precursor.

4. A method according to claim 3, wherein the metal oxide precursor is at least one metal halide, alkoxide, alkyl compound or hydride.

5. A method according to claim 4, wherein the metal is at least one metal of Group IIA, IIB, IIIA, IIIB, IVA, IVB, VA or VB of the Periodic Table.

6. A method according to claim 5, wherein the metal is at least one of Ge, Sn, Pb, Ti, P, As and B.

7. A method according to claim 1, wherein fixing step (c) is carried out by hydrolysis of the dopant.

8. A method according to claim 7, wherein hydrolysis is carried out by contacting the porous glass with water.

9. A method according to claim 8, wherein the porous glass is contacted with steam or is immersed in water.

10. A method according to any one of the preceding claims wherein the adsorption equilibrium amount of the dopant in step (a) is under the control of at least one of the temperature, the partial pressure of the dopant and the porosity of the porous glass.

11. A method according to claim 10, wherein the porous glass has pores having a diameter of less than 20 nm.

12. A method according to any one of the preceding claims wherein step (a) is preceded by (e) a step of partly clogging the pores of the porous glass with a polymer of a polymerizable compound, and step (c) is followed by (f) a step of removing the polymer of the polymerizable compound in the pores by decomposition.

13. A method according to claim 12, wherein the clogging step (e) comprises introducing a polymerizable compound into the pores of the porous glass and then partly photopolymerizing the polymerizable compound to clog the pores of the porous glass partly.

14. A method according to claim 13, wherein the clogging step (e) comprises a step (g) of removing the polymerizable compound which is not polymerized after the photopolymerization of the polymerizable compound.

15. A method according to claim 12, 13 or 14, wherein the removing step (f) is carried out by decomposing and removing a photopolymerized polymer which is formed of the polymerizable compound by heating it under an oxygen-containing atmosphere.

16. A method according to any one of claims 12 to 15 wherein the polymerizable compound is a photopolymerizable compound.

## Patentansprüche

1. Verfahren zur Herstellung eines Quarzglases (Kieselglases), umfassend:
a) Eindiffundieren eines Dotierungsmittels (dopant) in die Poren eines porösen Quarzglases durch Zusammenbringen des Dotierungsmittels in der Gasphase mit dem porösen Glas, bis das Dotierungsmittel eine Adsorptions-Gleichgewichtsmenge erreicht,
b) partielles Entfernen des eindiffundierten Dotierungsmittels durch Halten des porösen Glases in einer Atmosphäre, bei der ein Partialdruck des Dotierungsmittels aufrechterhalten wird, der niedriger ist als derjenige des Gleichgewichts-Adsorptionsdruckes des Dotierungsmittels aus der Diffusionsstufe (a), um die Konzentration an Dotierungsmittel in der Nähe der porösen Glasoberfläche zu verringern,
c) Fixieren des Dotierungsmittels in den Poren des porösen Glases und
d) Brennen des porösen Glases, um es unporös zu machen.

2. Verfahren nach Anspruch 1, wobei das poröse Glas ein solches ist, das erhalten worden ist nach einem Sol/Gel-Verfahren oder einer Phasentrenn-Behandlung von Borsilicatglas.

3. Verfahren nach Anspruch 1 oder 2, wobei das Dotierungsmittel ein Metalloxid-Vorläufer ist.

4. Verfahren nach Anspruch 3, wobei der Metalloxid-Vorläufer mindestens ein Metallhalogenid, -alkoxid, eine -alkylverbindung oder ein -hydrid ist.

5. Verfahren nach Anspruch 4, wobei das Metall mindestens ein Metall ist aus der Gruppe IIA, IIB, IIIA, IIIB, IVA, IVB, VA oder VB des Periodensystems.

6. Verfahren nach Anspruch 5, wobei das Metall mindestens eines ist, ausgewählt aus Ge, Sn, Pb, Ti, P, As und B.

7. Verfahren nach Anspruch 1, wobei die Fixierungsstufe (c) durchgeführt wird durch Hydrolyse des Dotierungsmittels.

8. Verfahren nach Anspruch 7, wobei die Hydrolyse durchgeführt wird durch Zusammenbringen des porösen Glases mit Wasser.

9. Verfahren nach Anspruch 8, wobei das poröse Glas mit Dampf in Kontakt gebracht oder in Wasser eingetaucht wird.

10. Verfahren nach einem der vorangehenden Ansprüche, wobei die Adsorptions-Gleichgewichtsmenge des Dotierungsmittels in Stufe (a) gesteuert wird durch die Temperatur, den Partialdruck des Dotierungsmittels und/oder die Porosität des porösen Glases.

11. Verfahren nach Anspruch 10, wobei das poröse Glas Poren mit einem Durchmesser von < 20 nm aufweist.

12. Verfahren nach einem der vorangehenden Ansprüche, wobei vor Stufe (a) eine Stufe (e) durchgeführt wird, bei der die Poren des porösen Glases teilweise mit einem Polymer einer polymerisierbaren Verbindung verstopft werden, und nach Stufe (c) eine Stufe (f) durchgeführt wird, in der das Polymer der polymerisierbaren Verbindung in den Poren zersetzt wird.

13. Verfahren nach Anspruch 12, wobei die Stufe (e) das Einführen einer polymerisierbaren Verbindung in die Poren des porösen Glases und anschließendes partielles Photopolymerisieren der polymerisierbaren Verbindung umfaßt, um die Poren des porösen Glases teilweise zu verstopfen.

14. Verfahren nach Anspruch 13, wobei die Stufe (e) eine Stufe (g) umfaßt, in der die polymerisierbare Verbindung, die nach der Photopolymerisation der Polymerisierbaren Verbindung nicht polymerisiert ist, entfernt wird.

15. Verfahren nach Anspruch 12, 13 oder 14, wobei die Stufe (f) durchgeführt wird durch Zersetzen und Entfernen eines photopolymerisierten Polymers, das aus der polymerisierbaren Verbindung gebildet worden ist durch Erhitzen in einer sauerstoffhaltigen Atmosphäre.

16. Verfahren nach einem der Ansprüche 12 bis 15, wobei die polymerisierbare Verbindung eine photopolymerisierbare Verbindung ist.

## Revendications

1. Procédé de production d'un verre de silice, qui comprend les étapes consistant à :
a) faire diffuser un dopant dans les pores d'un verre de silice poreux, en mettant le dopant en phase gazeuse en contact avec le verre poreux, jusqu'à ce que la quantité de dopant atteigne une valeur correspondant à l'équilibre d'adsorption,
b) éliminer en partie le dopant qui a diffusé, en maintenant le verre poreux dans une atmosphère où la pression partielle du dopant est maintenue à une valeur inférieure à celle de la pression d'équilibre d'adsorption du dopant lors de l'étape de diffusion (a), pour abaisser la concentration de dopant au voisinage de la surface du verre poreux,
c) fixer le dopant dans les pores du verre poreux, et
d) chauffer le verre poreux pour le rendre non poreux.

2. Procédé selon la revendication 1, dans lequel le verre poreux est produit par un procédé sol-gel ou par un traitement de séparation de phase d'un verre au borosilicate.

3. Procédé selon la revendication 1 ou 2, dans lequel le dopant est un précurseur d'oxyde métallique.

4. Procédé selon la revendication 3, dans lequel le précurseur d'oxyde métallique est au moins un halogénure métallique, un alcoolate de métal, un dérivé alkylé d'un métal ou un hydrure métallique.

5. Procédé selon la revendication 4, dans lequel le métal est au moins un métal du groupe IIA, IIB, IIIA, IIIB, IVA, IVB, VA ou VB du tableau périodique des éléments.

6. Procédé selon la revendication 5, dans lequel le métal est au moins l'un des éléments Ge, Sn, Pb, Ti, P, As et B.

7. Procédé selon la revendication 1, dans lequel l'étape de fixation (c) est réalisée par hydrolyse du dopant.

8. Procédé selon la revendication 7, dans lequel on réalise l'hydrolyse en mettant le verre poreux en contact avec de l'eau.

9. Procédé selon la revendication 8, dans lequel le verre poreux est mis en contact avec de la vapeur ou est immergé dans de l'eau.

10. Procédé selon l'une quelconque des revendications précédentes, dans lequel, dans l'étape (a), la quantité de dopant correspondant à l'équilibre d'adsorption est réglée par au moins l'un des facteurs suivants : la température, la pression partielle du dopant et la porosité du verre poreux.

11. Procédé selon la revendication 10, dans lequel le verre poreux présente des pores ayant un diamètre inférieur à 20nm.

12. Procédé selon l'une quelconque des revendications précédentes, dans lequel l'étape (a) est précédée d'une étape (e) qui consiste à boucher partiellement les pores du verre poreux avec un polymère d'un composé polymérisable, et l'étape (c) est suivie d'une étape (f) qui consiste à éliminer le polymère du composé polymérisable des pores par décomposition.

13. Procédé selon la revendication 12, dans lequel l'étape de bouchage (e) comprend l'introduction d'un composé polymérisable dans les pores du verre poreux, puis la photopolymérisation partielle du composé polymérisable pour boucher en partie les pores du verre poreux.

14. Procédé selon la revendication 13, dans lequel l'étape de bouchage (e) comprend une étape (g) qui consiste à éliminer le composé polymérisable qui n'est pas polymérisé après la photopolymérisation du composé polymérisable.

15. Procédé selon l'une quelconque des revendications 12 à 14, dans lequel on effectue l'étape d'élimination (f) en décomposant et en éliminant un polymère photopolymérisé, formé du composé polymérisable, par chauffage dudit polymère dans une atmosphère renfermant de l'oxygène.

16. Procédé selon l'une quelconque des revendications 12 à 15, dans lequel le composé polymérisable est un composé photopolymérisable.
